# EUROPEAN PATENT APPLICATION

(11) **EP 4 797 513 A1**
(43) Date of publication of application: **26.08.2026**
(21) Application number: 26159049.1
(22) Date of filing: 17.02.2026
(51) Int. Cl.: H02M 1/00, H02M 1/32, H02M 7/487, H02M 7/493

(54) **POWER CONVERTER**

(30) Priority: 24.02.2025 CN 202510210377
(71) Applicant: HUAWEI TECHNOLOGIES CO., LTD., Shenzhen 518129 (CN)
(72) Inventor: Yang, Zhibing, Shenzhen, 518129 (CN); Lv, Shuyi, Shenzhen, 518129 (CN); Zhang, Ningyun, Shenzhen, 518129 (CN); Hu, Xing, Shenzhen, 518129 (CN)
(74) Representative: Epping - Hermann - Fischer

(57) **Abstract**

An embodiment of this application provides a power converter. The power converter includes a housing, and a controller, a plurality of power conversion circuits, and a plurality of relays that are accommodated in the housing. The power conversion circuit is configured to convert a direct current from a photovoltaic module or an energy storage battery into an alternating current, and includes an input and three phase outputs. Inputs of the plurality of power conversion circuits are configured to connect to the photovoltaic module or the energy storage battery. Three phase outputs of the plurality of power conversion circuits are connected in parallel and then are configured to connect to a power grid, and each phase output of each power conversion circuit is connected to the power grid through one or more of the relays. The controller is configured to control the plurality of relays to be turned on at the same time, so that the power converter is on-grid.

## Description

### TECHNICAL FIELD

This application relates to the field of power electronics, and in particular, to a power converter.

### BACKGROUND

To achieve a higher total power output of a photovoltaic power generation system, a quantity of inverters connected in parallel in the photovoltaic power generation system gradually increases. A relay on an alternating-current side of each inverter is controlled to be turned on or turned off, to achieve on-grid connection and overcurrent protection functions of a plurality of inverters. During actual application, each inverter controls, by using a respective controller, a relay connected to a power conversion circuit to be turned on, so that the inverter is on-grid. However, because there is a communication delay between controllers in different inverters, it cannot be ensured that a plurality of controllers control corresponding relays to be turned on at a same moment. As a result, after a plurality of inverters are controlled to be on-grid, different inverters may output different alternating current voltages when being on-grid, forming a circulating current in a loop and generating a large on-grid current surge. Consequently, a component is damaged, and reliability of the photovoltaic power generation system is affected.

### SUMMARY

This application provides a power converter, to ensure that a plurality of power conversion circuits in the power converter are on-grid at the same time, and reduce a circulating current between the plurality of power conversion circuits.

According to a first aspect, this application provides a power converter. The power converter includes a housing, and a controller, a plurality of power conversion circuits, and a plurality of relays that are accommodated in the housing. The power conversion circuit is configured to convert a direct current from a photovoltaic module or an energy storage battery into an alternating current, and includes an input and three phase outputs. Inputs of the plurality of power conversion circuits are configured to connect to the photovoltaic module or the energy storage battery. Three phase outputs of the plurality of power conversion circuits are connected in parallel and then are configured to connect to a power grid, and each phase output of each power conversion circuit is connected to the power grid through one or more of the relays. The controller is configured to control the plurality of relays to be turned on at the same time, so that the power converter is on-grid.

The plurality of power conversion circuits are integrated into one power converter, so that a power level of the power converter can be improved. In addition, the plurality of relays are controlled by a same controller, so that a turn-on time difference between different relays can be reduced, to ensure that the plurality of power conversion circuits are on-grid at the same time. In this way, the power level of the power converter is improved, a circulating current between the plurality of power conversion circuits is reduced, and reliability of a power supply system is improved. It should be noted that each power conversion circuit can output three phase alternating currents, to be specific, an A-phase alternating current, a B-phase alternating current, and a C-phase alternating current.

In a possible implementation, the controller is further configured to control the plurality of power conversion circuits to convert the direct current from the photovoltaic module or the energy storage battery into the alternating current, and modulation waves of the plurality of power conversion circuits are the same. Herein, modulation waves corresponding to all the power conversion circuit in the power converter are same, so that electrical parameters such as amplitudes and phases of alternating currents output by the plurality of power conversion circuits are the same. In this way, the circulating current between the plurality of power conversion circuits is further reduced.

In a possible implementation, the controller is further configured to: when differences between voltage amplitudes of alternating currents output by the plurality of power conversion circuits and a voltage amplitude of the power grid are all less than a specified threshold, control the plurality of relays to be turned on at the same time. In this arrangement, a large current surge generated due to an excessively large difference between a voltage of the power grid and a voltage of the power conversion circuit can be avoided.

In a possible implementation, the controller is further configured to: when the power grid is faulty, control all the plurality of relays to be turned off. The controller controls all the plurality of relays in the power converter to be turned off, so that all the plurality of power conversion circuits are disconnected from the power grid after the power grid is faulty, and device security is improved.

In a possible implementation, the controller is further configured to: when a current amplitude of an alternating current output by any one of the plurality of power conversion circuits is greater than a current threshold, control a corresponding relay connected to the any one of the power conversion circuits to be turned off. In this arrangement, the abnormal or faulty power conversion circuit can be isolated in time, and safe running of the power converter is ensured. In addition, normal operation of another power conversion circuit can be further ensured, so that availability and an electric energy yield of the power supply system are improved.

In a possible implementation, the power converter includes a direct current bus. The inputs of the plurality of power conversion circuits are connected in parallel and then connected to the direct current bus, and are connected to the photovoltaic module or the energy storage battery through the direct current bus. The controller is further configured to control the plurality of power conversion circuits to convert a direct current from the direct current bus into an alternating current. Herein, the inputs of the plurality of power conversion circuits are connected in parallel and then connected to a same direct current bus, so that voltages at the inputs of the plurality of power conversion circuits are same. The plurality of power conversion circuits convert a voltage of the same direct current bus, to further reduce a difference between the voltage amplitudes of the alternating currents output by the power conversion circuits, and reduce the circulating current between the power conversion circuits.

In a possible implementation, the power converter includes a plurality of coupled inductors, and the power conversion circuit includes an A-phase bridge arm, a B-phase bridge arm, and a C-phase bridge arm. Bridge arm midpoints of A-phase bridge arms in the plurality of power conversion circuits are all connected to the one or more of the relays through a same coupled inductor. Bridge arm midpoints of B-phase bridge arms in the plurality of power conversion circuits are all connected to the one or more of the relays through a same coupled inductor. Bridge arm midpoints of C-phase bridge arms in the plurality of power conversion circuits are all connected to the one or more of the relays through a same coupled inductor. Herein, if the controller controls a phase difference between a plurality of carriers of the plurality of power conversion circuits to be a specified angle, the phases of the alternating currents output by the plurality of power conversion circuits are different. Each coupled inductor is configured to adjust phases of alternating currents output by different power conversion circuits to be same, so that the power converter supplies power to the power grid normally.

In a possible implementation, the power converter includes a plurality of filter inductors, and the power conversion circuit includes an A-phase bridge arm, a B-phase bridge arm, and a C-phase bridge arm. Bridge arm midpoints of an A-phase bridge arm, a B-phase bridge arm, and a C-phase bridge arm in each power conversion circuit are separately connected to the one or more of the relays through one independent filter inductor. Herein, if the controller controls the phase difference between the plurality of carriers of the plurality of power conversion circuits to be the specified angle, the phases of the alternating currents output by the plurality of power conversion circuits are different. Each filter inductor is configured to adjust the phases of the alternating currents output by the different power conversion circuits to be same, so that the power converter supplies power to the power grid normally. In addition, compared with the coupled inductor, an independent filter inductor does not need a magnetic core, so that space occupied by the filter inductor on a circuit board is reduced, and power density of the power converter is improved.

In a possible implementation, the controller is further configured to control the phase difference between the plurality of carriers of the plurality of power conversion circuits to be the specified angle. The specified angle is a ratio of 360° to a quantity of the plurality of power conversion circuits. Herein, for a power converter with N power conversion circuits connected in parallel, a phase difference between carriers of the N power conversion circuits is controlled to be 360°/N, so that current ripples output by the N power conversion circuits have a same magnitude and a phase difference of 360°/N. In this case, the current ripples output by the N power conversion circuits are superimposed to form a current ripple whose frequency is N times a switching frequency. According to an inductive reactance formula, an inductive reactance of the filter inductor to the current ripple is positively correlated with an inductance value and the frequency of the current ripple. Based on a same inductive reactance of the filter inductor to the current ripple, a frequency of an output current ripple of the power converter is controlled to be increased by N times, so that an inductance value of a filter inductor connected to the output can be reduced to 1/N of an original inductance value, and further, effect of filtering the current ripple by the filter inductor can remain unchanged while a volume of the filter inductor is reduced, and the power density of the power converter is improved.

### BRIEF DESCRIPTION OF DRAWINGS

FIG. 1 is a diagram of an architecture of a photovoltaic energy storage system;
FIG. 2 is a diagram of a connection between a photovoltaic inverter and a power grid;
FIG. 3 is a schematic of a structure of a power converter according to this application;
FIG. 4 is a schematic of another structure of a power converter according to this application;
FIG. 5 is a schematic of another structure of a power converter according to this application;
FIG. 6 is a schematic of another structure of a power converter according to this application; and
FIG. 7 is a schematic of another structure of a power converter according to this application.

### DESCRIPTION OF EMBODIMENTS

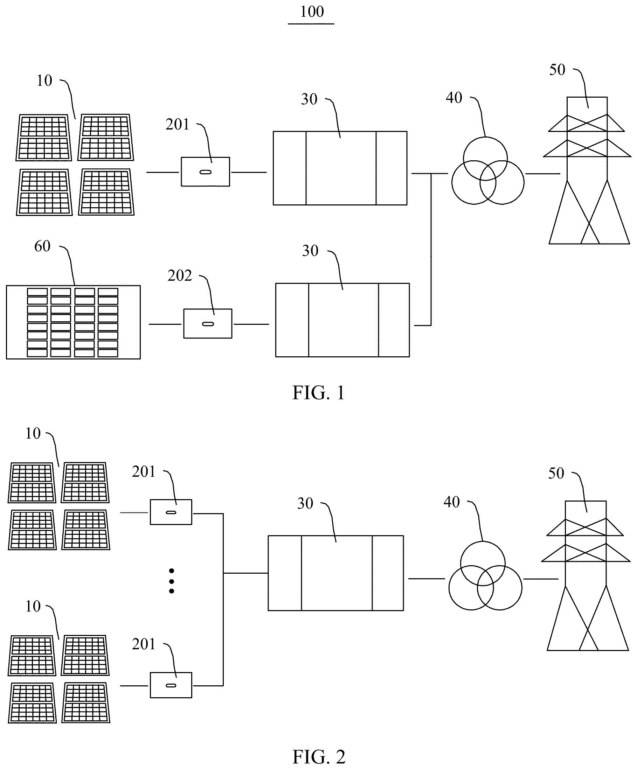

FIG. 1 is a diagram of an architecture of a photovoltaic energy storage system. The photovoltaic energy storage system 100 (a solar photovoltaic energy storage and power generation system) includes a photovoltaic system and an energy storage system. Refer to FIG. 1. In the photovoltaic system, a photovoltaic module 10 directly converts solar energy into electric energy through photovoltaic effect. The photovoltaic module 10 usually includes a plurality of cells connected in series or in parallel, to achieve specific output power. A photovoltaic inverter 201 is configured to convert a direct current from the photovoltaic module 10 into an alternating current, and send the alternating current to a box-type transformer station 30 corresponding to the photovoltaic inverter 201 for voltage conversion. The box-type transformer station 30 corresponding to the photovoltaic inverter 201 can convert a low-voltage alternating current output by the photovoltaic inverter 201 into a medium-voltage alternating current, and then transmit the alternating current to a booster station 40 and to a power grid 50 or another load.

Refer to FIG. 1. In the energy storage system, an energy storage battery 60 can store unstable electric energy, and convert a direct current into an alternating current through a power conversion system (PCS) 202, and transmit stable electric energy to the power grid 50 or the another load after the alternating current passes through a box-type transformer station 30 corresponding to the energy storage battery 60. In addition, through the power conversion system 202, an alternating current of the power grid 50 can also be converted into a direct current to charge the energy storage battery 60, and then electric energy is stored in the energy storage battery 60. A power converter provided in this application includes the photovoltaic inverter and the power conversion system.

In a current photovoltaic energy storage system, to achieve higher total power output, a plurality of power conversion systems or a plurality of photovoltaic inverters are usually connected in parallel in the photovoltaic energy storage system. An example in which the plurality of photovoltaic inverters are connected in parallel is used. Refer to FIG. 2 together. FIG. 2 is a diagram of a connection between a photovoltaic inverter and a power grid. As shown in FIG. 2, a plurality of photovoltaic inverters 201 are connected in parallel and then connected to the box-type transformer station 30. The box-type transformer station 30 can convert a low-voltage alternating current output by the plurality of photovoltaic inverters 201 connected in parallel into a medium-voltage alternating current, and then transmit the alternating current to the booster station 40 and to the power grid 50. Each photovoltaic inverter 201 includes only one power conversion circuit, and each photovoltaic inverter 201 controls, by using a respective controller, a relay connected to the power conversion circuit to be turned on, so that the photovoltaic inverter 201 is on-grid. However, because there is a communication delay between controllers in different photovoltaic inverters 201, it cannot be ensured that a plurality of controllers control corresponding relays to be turned on at a same moment. As a result, the plurality of photovoltaic inverters 201 cannot be on-grid at the same time. When the plurality of photovoltaic inverters 201 are on-grid at different moments, a difference between voltage amplitudes of alternating currents output by the different photovoltaic inverters 201 is excessively large, forming a circulating current in a loop and generating a large on-grid current surge. Consequently, a component is damaged, and reliability of the photovoltaic energy storage system is affected.

In the power converter provided in this application, the power converter includes a housing, and a controller, a plurality of power conversion circuits, and a plurality of relays that are accommodated in the housing. The power conversion circuit includes an input and three phase outputs. The three phase outputs are an A-phase output, a B-phase output, and a C-phase output. Inputs of the plurality of power conversion circuits are configured to connect to the photovoltaic module or the energy storage battery. Three phase outputs of the plurality of power conversion circuits are connected in parallel and then are configured to connect to the power grid, and each phase output of each power conversion circuit is connected to the power grid through one or more of the relays. Each power conversion circuit converts a direct current from the photovoltaic module or the energy storage battery into an alternating current. Herein, the plurality of power conversion circuits are integrated into one power converter, so that a power level of the power converter can be improved. In addition, when the power grid is normal, the controller is configured to control the plurality of relays connected to the plurality of power conversion circuits to be turned on at the same time, so that the power converter is on-grid. Because the plurality of relays connected to the plurality of power conversion circuits are all controlled by a same controller, a turn-on time difference between different relays is reduced, so that the power level of the power converter is improved, and a circulating current between the plurality of power conversion circuits is reduced. In this way, reliability of the photovoltaic energy storage system is improved.

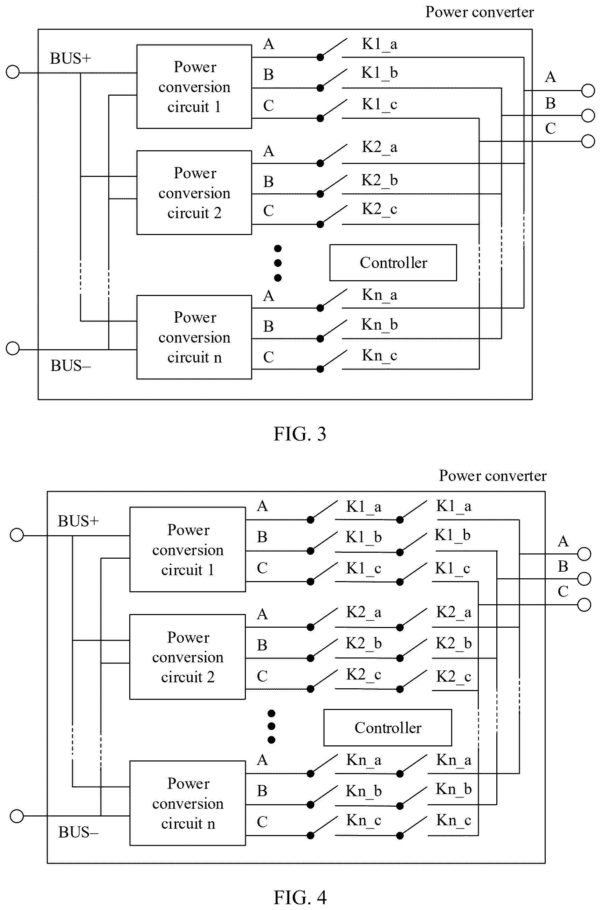

FIG. 3 is a schematic of a structure of a power converter according to this application. As shown in FIG. 3, the power converter includes n power conversion circuits, namely, a power conversion circuit 1 to a power conversion circuit n, where n is an integer greater than 1. Each power conversion circuit includes an A-phase output, a B-phase output, and a C-phase output. A-phase outputs of the n power conversion circuits are correspondingly connected to each other, B-phase outputs of the n power conversion circuits are correspondingly connected to each other, and C-phase outputs of the n power conversion circuits are correspondingly connected to each other. In the n power conversion circuits, each phase output of each power conversion circuit is connected to one relay. Three phase outputs of the power conversion circuit 1 are respectively connected to a relay K1_a, a relay K1_b, and a relay K1_c, and another power conversion circuit adopts a similar connection manner. Further, each phase output of each power conversion circuit is connected to two relays connected in series. Refer to FIG. 4 together. FIG. 4 is a schematic of another structure of a power converter according to this application. As shown in FIG. 4, in n power conversion circuits, each phase output of each power conversion circuit is connected to two relays. When one of the two relays connected in series is faulty, the other relay may ensure that the power conversion circuit is disconnected from a power grid. Herein, in the power converters shown in FIG. 3 and FIG. 4, when the power grid is normal, a controller controls a plurality of relays connected to the n power conversion circuits to be turned on at the same time, so that the power converters are on-grid, thereby reducing a turn-on time difference between different relays. In this way, it is ensured that the plurality of power conversion circuits are on-grid at the same time, and damage caused by a circulating current is alleviated while a power level is improved.

In some feasible implementations, the power converter includes a direct current bus. Inputs of the plurality of power conversion circuits are connected in parallel and then connected to a same direct current bus, and are connected to a photovoltaic module or an energy storage battery through the direct current bus. Refer to FIG. 3 again. Inputs of the n power conversion circuits are connected in parallel and then connected to a same direct current bus. Specifically, a positive input of each power conversion circuit is connected to a positive direct current bus BUS+, a negative input of each power conversion circuit is connected to a negative direct current bus BUS-, and the plurality of power conversion circuits are connected to the photovoltaic module or the energy storage battery through the direct current bus. When the power converter is on-grid, the controller in the power converter controls the plurality of power conversion circuits to convert a direct current from the direct current bus into an alternating current. Herein, the inputs of the plurality of power conversion circuits are connected in parallel and then connected to the same direct current bus, so that voltages at the inputs of the plurality of power conversion circuits are same. The plurality of power conversion circuits convert a voltage of the same direct current bus, to further reduce a difference between voltage amplitudes of alternating currents output by the power conversion circuits, and reduce the circulating current between the power conversion circuits.

In some feasible implementations, the controller in the power converter is configured to control modulation waves of the plurality of power conversion circuits to be the same. In a running process of the power converter, the controller generates the modulation wave of the power converter based on a total output power, and controls all the power conversion circuits based on the generated modulation wave. Specifically, the controller generates a pulse width modulation wave based on a same modulation wave and carrier, and controls, based on the same pulse width modulation wave, switching transistors in bridge arms included in all the power conversion circuits, so that all the power conversion circuits output a same alternating current. All the power conversion circuits are controlled based on the same modulation wave, so that the following can be avoided: A corresponding modulation wave is generated based on an electrical parameter of each power conversion circuit, and different generated modulation waves are caused; consequently, electrical parameters such as amplitudes and phases of alternating currents output by the power conversion circuits are different. In this way, the circulating current between the plurality of power conversion circuits is further reduced.

In some feasible implementations, the controller is further configured to: when the power grid is normal, and differences between voltage amplitudes of the alternating currents output by the plurality of power conversion circuits and a voltage amplitude of the power grid are all less than a specified threshold, control the plurality of relays to be turned on at the same time, so that the power converter is on-grid. Specifically, the power converter shown in FIG. 3 is used as an example. When the voltage amplitude of the power grid reaches a specified voltage range, the controller determines that the current power grid is normal. Then, when differences between voltage amplitudes of alternating currents output by the power conversion circuit 1 to the power conversion circuit n and the voltage amplitude of the power grid are all less than the specified threshold, the controller controls a plurality of relays connected to the n power conversion circuits to be turned on at the same time, so that the power converter is on-grid. This reduces the turn-on time difference between different relays, and ensures that the plurality of power conversion circuits are on-grid at the same time. In addition, this also avoids a large current surge generated due to an excessively large difference between a voltage of the power grid and a voltage of the power conversion circuit.

In some feasible implementations, the controller is further configured to: when the power grid is faulty, control all the plurality of relays in the power converter to be turned off. Specifically, in an on-grid running process of the power converter, the controller determines, based on power grid information such as the voltage amplitude of the power grid, a voltage frequency of the power grid, and a voltage phase of the power grid, whether the power grid is faulty, and when determining that the power grid is faulty, controls all the plurality of relays in the power converter to be turned off, to control the power converter to be off-grid, thereby protecting the power converter during a power grid fault. The controller controls all the plurality of relays in the power converter to be turned off, to ensure that all the plurality of power conversion circuits are disconnected from the power grid after the power grid is faulty, so that device security is improved.

In some feasible implementations, the controller is further configured to: when a current amplitude of an alternating current output by any one of the plurality of power conversion circuits is greater than a current threshold, control a relay connected to the any one of the power conversion circuits to be turned off. Specifically, in the on-grid running process of the power converter, the controller detects the alternating current output by the any one of the plurality of power conversion circuits. The power converter shown in FIG. 3 is used as an example. If a current amplitude of an alternating current output by the power conversion circuit 1 is greater than a current threshold, the controller determines that overcurrent occurs in the power conversion circuit 1, controls the power conversion circuit 1 to stop sending a PWM driver gating signal, and controls the relay K1_a, the relay K1_b, and the relay K1_c connected to the power conversion circuit 1 to be disconnected, to isolate the abnormal or faulty power conversion circuit 1 in time, and ensure safe running of the power converter. In addition, normal operation of a power conversion circuit other than the power conversion circuit 1 can be further ensured, so that availability and an electric energy yield of the photovoltaic energy storage system are improved.

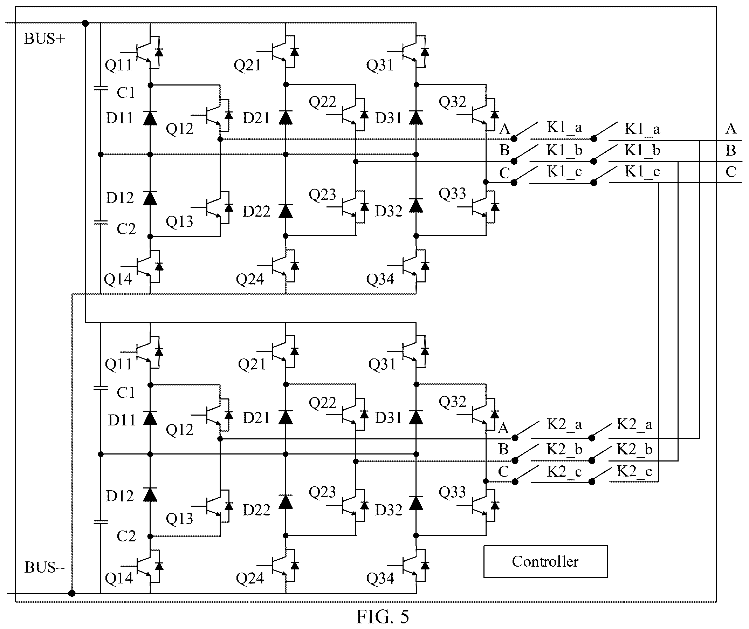

Optionally, in the power converter shown in FIG. 3 or FIG. 4, each power conversion circuit is a three-phase NPC topology. An example in which the power converter includes two power conversion circuits connected in parallel is used. FIG. 5 is a schematic of another structure of a power converter according to this application. As shown in FIG. 5, the power converter includes two power conversion circuits connected in parallel. A-phase outputs, B-phase outputs, and C-phase outputs of the two power conversion circuits are correspondingly connected to each other. Each power conversion circuit includes two capacitors connected in series and three bridge arms. Specifically, the first power conversion circuit includes a capacitor C1 and a capacitor C2 connected in series and three bridge arms (an A-phase bridge arm, a B-phase bridge arm, and a C-phase bridge arm). Bridge arm midpoints of the A-phase bridge arm, the B-phase bridge arm, and the C-phase bridge arm included in the power conversion circuit are respectively used as an A-phase output, a B-phase output, and a C-phase output of the power conversion circuit. The A-phase bridge arm includes a switching transistor Q11, a switching transistor Q12, a switching transistor Q13, and a switching transistor Q14 that are connected in series. The switching transistor Q11, the switching transistor Q12, the switching transistor Q13, and the switching transistor Q14 are sequentially connected in series and are connected in parallel to two ends of the capacitor C1 and the capacitor C2. A series connection point of the switching transistor Q11 and the switching transistor Q12 is connected to a series connection point of the switching transistor Q13 and the switching transistor Q14 through two diodes D11 and D12 that are connected in series. A series connection point of the two diodes connected in series is connected to a series connection point of the capacitor C1 and the capacitor C2, and the series connection point of the switching transistor Q12 and the switching transistor Q13 is used as the bridge arm midpoint of the A-phase bridge arm. The B-phase bridge arm includes a switching transistor Q21, a switching transistor Q22, a switching transistor Q23, a switching transistor Q24, a diode D21, and a diode D22. The C-phase bridge arm includes a switching transistor Q31, a switching transistor Q32, a switching transistor Q33, a switching transistor Q34, a diode D31, and a diode D32. Circuit structures of the B-phase bridge arm and the C-phase bridge arm are the same as that of the A-phase bridge arm. Details are not described herein again. Each switching transistor in the power converter may be a metal-oxide-semiconductor field-effect transistor (Metal-Oxide-Semiconductor Field-Effect Transistor, MOSFET), which is referred to as a MOS transistor for short, or may be an insulated gate bipolar transistor (insulated gate bipolar transistor, IGBT) or the like. This is not limited herein. In addition, each phase output of each power conversion circuit is connected to two relays. It may be understood that a circuit structure of the second power conversion circuit in the power converter in FIG. 5 is similar to a circuit structure of the first power conversion circuit. Details are not described herein again.

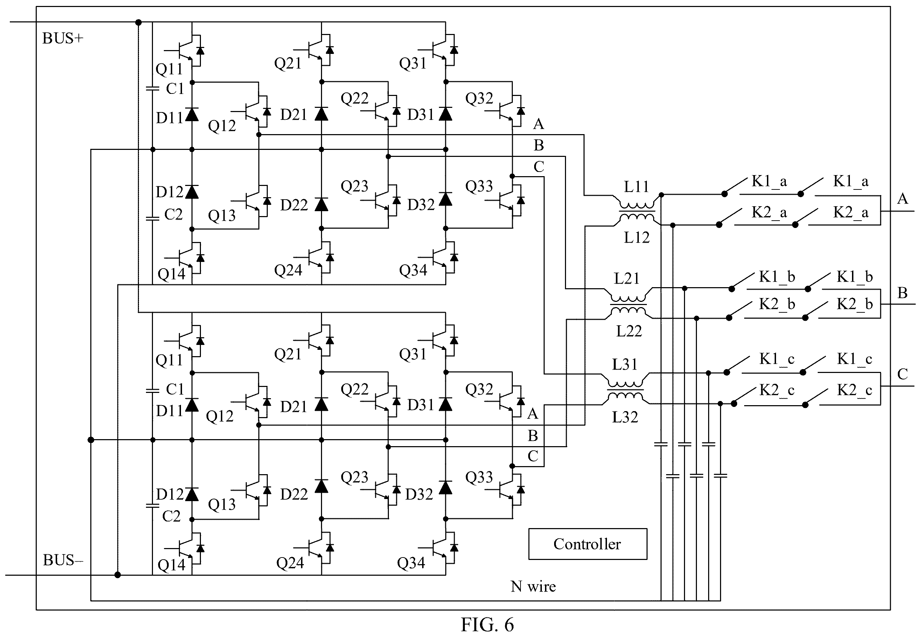

Optionally, the power converter further includes a filter inductor. The power converter shown in FIG. 5 is used as an example. Refer to FIG. 6 together. FIG. 6 is a schematic of another structure of a power converter according to this application. As shown in FIG. 6, an A-phase output of a first power conversion circuit in the power converter and an A-phase output of a second power conversion circuit in the power converter are respectively connected to a first end of a filter inductor L11 and a first end of a filter inductor L12. A second end of the filter inductor L11 is connected to two relays K1_a connected in series, and a second end of the filter inductor L12 is connected to two relays K2_a connected in series. The filter inductor L11 and the filter inductor L12 are coupled into a coupled inductor. A B-phase output of the first power conversion circuit in the power converter and a B-phase output of the second power conversion circuit in the power converter are respectively connected to a first end of a filter inductor L21 and a first end of a filter inductor L22. A second end of the filter inductor L21 is connected to two relays K1_b connected in series, and a second end of the filter inductor L22 is connected to two relays K2_b connected in series. The filter inductor L21 and the filter inductor L22 are coupled into a coupled inductor. Similarly, a C-phase output of the first power conversion circuit in the power converter and a C-phase output of the second power conversion circuit in the power converter are respectively connected to a first end of a filter inductor L31 and a first end of a filter inductor L32. A second end of the filter inductor L31 is connected to two relays K1_c connected in series, and a second end of the filter inductor L32 is connected to two relays K2_c connected in series. The filter inductor L31 and the filter inductor L32 are coupled into a coupled inductor. In an on-grid running process of the power converter, the controller may control a phase difference between a plurality of carriers of the plurality of power conversion circuits to be a specified angle. For example, a controller in FIG. 6 controls modulation waves of the two power conversion circuits to be the same, and a phase difference between carriers is 180°, so that a phase difference between alternating currents output by the two power conversion circuits is 180°. The A-phase output is used as an example. A phase difference between alternating currents output by the A-phase output of the first power conversion circuit and the A-phase output of the second power conversion circuit is 180°, and the coupled inductor (including the filter inductor L21 and the filter inductor L22) jointly connected to the A-phase outputs of the two power conversion circuits adjust phases of alternating currents output by different power conversion circuits to be same. Functions of the coupled inductors connected to the B-phase outputs and the C-phase outputs of the two power conversion circuits are similar to that of the coupled inductor connected to the A-phase output. Details are not described herein again.

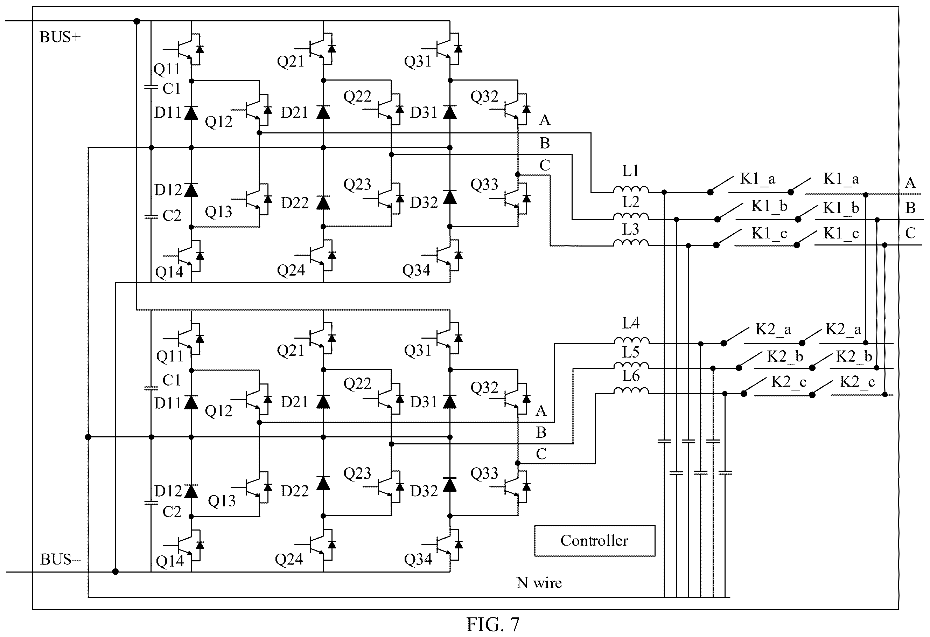

Optionally, the filter inductors in the power converter are not coupled to each other. Refer to FIG. 7 together. FIG. 7 is a schematic of another structure of a power converter according to this application. As shown in FIG. 7, an A-phase output, a B-phase output, and a C-phase output of a first power conversion circuit in the power converter are respectively connected to respective corresponding relays through a separate filter inductor L1, a separate filter inductor L2, and a separate filter inductor L3. An A-phase output, a B-phase output, and a C-phase output of a second power conversion circuit are respectively connected to respective corresponding relays through a separate filter inductor L4, a separate filter inductor L5, and a separate filter inductor L6. Similarly, in the power converter shown in FIG. 7, if a controller controls a phase difference between a plurality of carriers of a plurality of power conversion circuits to be the specified angle, phases of alternating currents output by the plurality of power conversion circuits are different. Each filter inductor is configured to adjust phases of alternating currents output by different power conversion circuits to be same. In addition, compared with a coupled inductor, an independent filter inductor does not need a magnetic core, so that costs can be saved.

In some feasible implementations, the controller is further configured to control the phase difference between the plurality of carriers of the plurality of power conversion circuits to be the specified angle. The specified angle is a ratio of 360° to a quantity of the plurality of power conversion circuits. Specifically, for a power converter with N power conversion circuits connected in parallel, a phase difference between carriers of the N power conversion circuits is 360°/N. The power converter shown in FIG. 6 or FIG. 7 is used as an example. In an on-grid running process of the power converter, the controller generates a pulse width modulation wave based on the carrier and a same modulation wave, and controls, based on the generated pulse width modulation wave, a switching transistor in a bridge arm included in each power conversion circuit, so that each power conversion circuit converts a direct current into an alternating current. Specifically, when two power conversion circuits are connected in parallel, a phase difference between carriers of the two power conversion circuits is 360°/2. That is, the phase difference between the carriers of the two power conversion circuits is controlled to be 180°. For example, an output current of each power conversion circuit is a sinusoidal current superimposed with a current ripple (for example, a triangular wave) whose frequency is a switching frequency. The phase difference between the carriers of the two power conversion circuits is controlled to be 180°, so that current ripples output by the two power conversion circuits have a same magnitude, and a phase difference is 180°. After the two current ripples with the phase difference of 180 degrees are superimposed in time domain, corresponding frequency domain distribution present after the two current ripples are superimposed is obtained based on a Fourier transform analysis. In the frequency domain distribution, the current ripple whose frequency is the switching frequency is canceled, and a current ripple whose frequency is twice the switching frequency is formed. Further, according to an inductive reactance formula XL=2πfL, an inductive reactance XL of an inductor is positively correlated with a frequency f of an alternating current passing through the inductor and an inductance value L. Therefore, based on a same inductive reactance of the filter inductor to the current ripple, a frequency of an output current ripple of the power converter is controlled to be increased by two times, so that an inductance value of a filter inductor connected to the output can be reduced to 1/2 of an original inductance value, and further, effect of filtering the current ripple by the filter inductor can remain unchanged while a volume of the filter inductor is reduced, and power density of the power converter is improved. In addition, because the two power conversion circuits connected in parallel share a same direct current bus, after the current ripples output by the two power conversion circuits are superimposed, the current ripple whose frequency is the switching frequency is canceled, and the current ripple whose frequency is twice the switching frequency is formed. An amplitude of the current ripple whose frequency is twice the switching frequency is smaller, so that a loss of a capacitor C1 and a capacitor C2 in each power conversion circuit by the current ripple is reduced, and a service life of a bus capacitor is prolonged. The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A power converter, wherein the power converter comprises a housing, and a controller, a plurality of power conversion circuits, and a plurality of relays that are accommodated in the housing;
the power conversion circuit is configured to convert a direct current from a photovoltaic module or an energy storage battery into an alternating current, and comprises an input and three phase outputs, inputs of the plurality of power conversion circuits are configured to connect to the photovoltaic module or the energy storage battery, three phase outputs of the plurality of power conversion circuits are connected in parallel and then are configured to connect to a power grid, and each phase output of the power conversion circuit is connected to the power grid through one or more of the relays; and
the controller is configured to control the plurality of relays to be turned on at the same time, so that the power converter is on-grid.

2. The power converter according to claim 1, wherein the controller is further configured to control the plurality of power conversion circuits to convert the direct current from the photovoltaic module or the energy storage battery into the alternating current, and modulation waves of the plurality of power conversion circuits are the same.

3. The power converter according to claim 1 or 2, wherein the controller is further configured to: when differences between voltage amplitudes of alternating currents output by the plurality of power conversion circuits and a voltage amplitude of the power grid are all less than a specified threshold, control the plurality of relays to be turned on at the same time.

4. The power converter according to any one of claims 1 to 3, wherein the controller is further configured to: when the power grid is faulty, control all the plurality of relays to be turned off.

5. The power converter according to any one of claims 1 to 3, wherein the controller is further configured to: when a current amplitude of an alternating current output by any one of the plurality of power conversion circuits is greater than a current threshold, control a relay connected to the any one of the power conversion circuits to be turned off.

6. The power converter according to any one of claims 1 to 5, wherein the power converter comprises a direct current bus, and the inputs of the plurality of power conversion circuits are connected in parallel and then connected to the direct current bus, and are connected to the photovoltaic module or the energy storage battery through the direct current bus; and
the controller is further configured to control the plurality of power conversion circuits to convert a direct current from the direct current bus into an alternating current.

7. The power converter according to any one of claims 1 to 6, wherein the power converter comprises a plurality of coupled inductors, and the power conversion circuit comprises an A-phase bridge arm, a B-phase bridge arm, and a C-phase bridge arm; and
bridge arm midpoints of A-phase bridge arms in the plurality of power conversion circuits are all connected to the one or more of the relays through a same coupled inductor, bridge arm midpoints of B-phase bridge arms in the plurality of power conversion circuits are all connected to the one or more of the relays through a same coupled inductor, and bridge arm midpoints of C-phase bridge arms in the plurality of power conversion circuits are all connected to the one or more of the relays through a same coupled inductor.

8. The power converter according to any one of claims 1 to 6, wherein the power converter comprises a plurality of filter inductors, and the power conversion circuit comprises an A-phase bridge arm, a B-phase bridge arm, and a C-phase bridge arm; and
bridge arm midpoints of an A-phase bridge arm, a B-phase bridge arm, and a C-phase bridge arm in each power conversion circuit are separately connected to the one or more of the relays through one independent filter inductor.

9. The power converter according to claim 7 or 8, wherein the controller is further configured to control a phase difference between a plurality of carriers of the plurality of power conversion circuits to be a specified angle, and the specified angle is a ratio of 360° to a quantity of the plurality of power conversion circuits.
